# EUROPEAN PATENT APPLICATION

(11) **EP 4 550 511 A1**
(43) Date of publication of application: **07.05.2025**
(21) Application number: 23831620.2
(22) Date of filing: 30.06.2023
(51) Int. Cl.: H01M 10/0585, H01M 4/38, H01M 10/052, H01M 10/0562

(54) **ALL-SOLID-STATE SECONDARY BATTERY**

(30) Priority: 30.06.2022 JP 2022105471
(71) Applicant: TDK Corporation, Tokyo 103-6128 (JP)
(72) Inventor: TAKEUCHI, Keiko, Tokyo 103-6128 (JP); OYAKE, Hisaji, Tokyo 103-6128 (JP); MUROI, Masayuki, Tokyo 103-6128 (JP)
(74) Representative: Epping - Hermann - Fischer
(86) International application number: PCT/JP2023/024343
(87) International publication number: WO 2024/005181

(57) **Abstract**

An all-solid-state secondary battery includes a laminate in which a positive electrode layer containing a positive electrode active material and a negative electrode layer containing a negative electrode active material are laminated with a solid electrolyte layer disposed therebetween, and a positive electrode external terminal attached to the positive electrode layer on a first surface of a side surface of the laminate and a negative electrode external terminal attached to the negative electrode layer on a second surface different from the first surface. The positive electrode layer extends in a direction in which it is directed from the first surface to the second surface, the negative electrode layer extends in a direction in which it is directed from the second surface to the first surface, and in the laminate, a void is formed in at least one region of a region surrounded by the positive electrode layer and the first surface, a region surrounded by the positive electrode layer, the solid electrolyte layer, and the first surface, a region surrounded by the negative electrode layer and the second surface, and a region surrounded by the negative electrode layer, the solid electrolyte layer, and the second surface.

## Description

### TECHNICAL FIELD

The present invention relates to an all-solid-state secondary battery.

Priority is claimed on Japanese Patent Application No. 2022-105471, filed June 30, 2022, the content of which is incorporated herein by reference.

### BACKGROUND ART

In recent years, electronics techniques have made remarkable advances and efforts are being made to make portable electronic devices smaller, lighter, thinner, and more multifunctional. Accordingly, there is a strong demand for batteries which serve as the power source for electronic devices to be smaller, lighter, thinner, and more reliable. At present, in the widely used lithium ion secondary batteries, an electrolyte (electrolytic solution) such as an organic solvent has been used as a medium for transferring ions in the related art. Here, lithium ion secondary batteries which use electrolytic solution are at risk of leakage of the electrolytic solution. Furthermore, since the organic solvents used in electrolytic solutions are flammable substances, there is a demand for safer batteries.

Thus, as a measure to improve the safety of batteries, a so-called all-solid-state secondary battery has been proposed, which uses a solid electrolyte instead of an electrolytic solution (for example, Patent Documents 1 and 2).

The all-solid-state secondary batteries in Patent Documents 1 and 2 include a laminate in which a positive electrode layer having a positive electrode active material layer and a negative electrode layer having a negative active material layer are laminated alternately with a solid electrolyte layer disposed between them and a pair of outer electrodes disposed so that they are in contact with and face the side surfaces of the laminate.

In all-solid-state secondary batteries, there is a concern that peeling of the electrode layers such as the positive electrode layer and the negative electrode layer would result in a decrease in cycle characteristics. Specifically, in all-solid-state secondary batteries, there is a concern that cycle characteristics would deteriorate if the positive electrode current collector and the negative electrode current collector are connected to the positive electrode external terminal and the negative electrode external terminal, respectively, and due to expansion and contraction during charging and discharging, the positive electrode current collector peels off from the positive electrode external terminal or the negative electrode current collector peels off from the negative electrode external terminal.

In the all-solid-state secondary battery of Patent Document 2, in order to prevent the positive electrode current collector and the negative electrode current collector from peeling off from the external terminal, it has been proposed to increase the thickness of the portions of the positive electrode current collector and the negative electrode current collector which are joined to the external terminal and to increase the area of the region in which the positive electrode current collector and the negative electrode current collector are joined to the external terminal.

### Citation List

### Patent Document

Patent Document 1: Japanese Unexamined Patent Application, First Publication No. 2021-108258
Patent Document 2: PCT International Publication No. WO 2020/105662

### SUMMARY OF INVENTION

### TECHNICAL PROBLEM

Here, the all-solid-state secondary batteries disclosed in Patent Documents 1 and 2 are unable to sufficiently prevent short circuits caused by expansion and contraction of the electrode layer during charging and discharging.

Specifically, the all-solid-state secondary battery in Patent Document 1 aims to improve the adhesion between similar materials and achieve high energy density and does not have any means for buffering stress caused by the expansion and contraction of the electrode layer, and as a result of the expansion and contraction of the electrode layer, the current collector may peel off from the outer electrode terminal or cracks may occur in the solid electrolyte layer, causing a short circuit in some cases.

In the all-solid-state secondary battery of Patent Document 2, expansion and contraction of the electrode active material during charging and discharging generates stress in the solid electrolyte layer from the end portion of the electrode layer which is not joined to the electrode external terminal and cracks form from the end portion through the solid electrolyte layer to the electrode layer of opposite polarity to the electrode layer, which can result in a short circuit.

The present invention was made in consideration of the above circumstances, and an object of the present invention is to suppress the occurrence of cracks extending from the end portion toward an electrode layer having a polarity different from that of the electrode layer, due to the influence of expansion and contraction of an electrode active material during charging and discharging.

### [Solution to Problem]

(1) An all-solid-state secondary battery according to a first aspect of the present invention includes
   a laminate in which a positive electrode layer containing a positive electrode active material and a negative electrode layer containing a negative electrode active material are laminated with a solid electrolyte layer disposed therebetween, and
   a positive electrode external terminal attached to the positive electrode layer on a first surface of a side surface of the laminate and a negative electrode external terminal attached to the negative electrode layer on a second surface of the side surface of the laminate different from the first surface,
   in which the positive electrode layer extends in a direction in which it is directed from the first surface to the second surface,
   the negative electrode layer extends in a direction in which it is directed from the second surface to the first surface, and
   in the laminate,
   a void is formed in at least one region of
   a region surrounded by the positive electrode layer and the first surface,
   a region surrounded by the positive electrode layer, the solid electrolyte layer, and the first surface,
   a region surrounded by the negative electrode layer and the second surface, and
   a region surrounded by the negative electrode layer, the solid electrolyte layer, and the second surface.
(2) **In** the all-solid-state secondary battery in (1) above, a ratio of a length of the void to a distance between the negative electrode layer and the first surface in an in-plane direction of the negative electrode layer may be 20% to 100%, and a ratio of a length of the void to a distance between the positive electrode layer and the second surface in an in-plane direction of the positive electrode layer may be 20% to 100%.
(3) In the all-solid-state secondary battery in (1) or (2) above, an angle formed by voids of two layers which define the void may be 30° or less.
(4) In the all-solid-state secondary battery in (1) to (3) above, the laminate may include a plurality of positive electrode layers including an outermost positive electrode layer located at an end in a lamination direction, a plurality of negative electrode layers including an outermost negative electrode layer located at an end in the lamination direction, and a plurality of solid electrolyte layers, and in the laminate, a void may be formed in at least one region of a region surrounded by the outermost positive electrode layer and the first surface, a region surrounded by the outermost positive electrode layer, the solid electrolyte layer, and the first surface, a region surrounded by the outermost negative electrode layer and the second surface, and a region surrounded by the outermost negative electrode layer, the solid electrolyte layer, and the second surface.
(5) In the all-solid-state secondary battery in (1) to (4) above, the laminate may include a plurality of positive electrode layers and a plurality of negative electrode layers, and a ratio of a sum of the number of positive electrode layers in contact with the void and the number of negative electrode layers in contact with the void to a total number of the plurality of positive electrode layers and the plurality of negative electrode layers may be 10% or more.
(6) In the all-solid-state secondary battery in (1) to (5) above, the positive electrode layer may include a positive electrode current collector and a positive electrode active material layer, the negative electrode layer may include a negative electrode current collector and a negative electrode active material layer, and the void may be in contact with the positive electrode active material layer or the negative electrode active material layer.
(7) In the all-solid-state secondary battery in (1) to (6) above, at least one of the positive electrode active material and the negative electrode active material may be AgPd.

### ADVANTAGEOUS EFFECTS OF INVENTION

According to the present invention, it is possible to suppress the occurrence of cracks caused by expansion and contraction of the electrode active material during charging and discharging from the end portion through the solid electrolyte layer to an electrode layer having a polarity different from that of the electrode layer or to an external terminal having a polarity different from that of the electrode layer.

### BRIEF DESCRIPTION OF DRAWINGS

FIG. 1 is a cross-sectional view of an all-solid-state secondary battery according to an embodiment of the present invention.
FIG. 2 is a cross-sectional view showing a modified example of the all-solid-state secondary battery in FIG. 1.
FIG. 3 is a cross-sectional view showing another modified example of the all-solid-state secondary battery in FIG. 1.
FIG. 4 is a cross-sectional view showing another modified example of the all-solid-state secondary battery in FIG. 1.
FIG. 5 is a cross-sectional view showing another modified example of the all-solid-state secondary battery in FIG. 1.
FIG. 6 is a cross-sectional view showing another modified example of the all-solid-state secondary battery in FIG. 1.

### DESCRIPTION OF EMBODIMENTS

An example of an embodiment of the present invention will be described in detail below with reference to the drawings. In the drawings used in the following description, characteristic portions may be enlarged for the sake of convenience to make the characteristics of the present invention easier to understand in some cases. For this reason, the dimensional ratios of each constituent element may differ from the actual ones in some cases.

### [All-solid-state secondary battery]

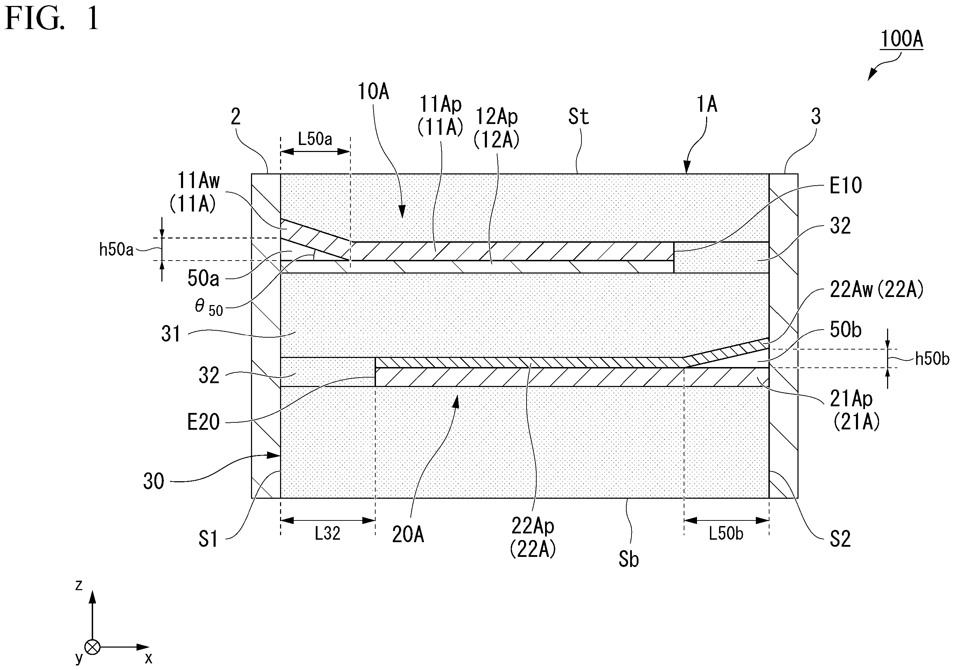

FIG. 1 is a cross-sectional view of an all-solid-state secondary battery according to an embodiment of the present invention. An all-solid-state secondary battery 100A shown in FIG. 1 includes a laminate 1A formed by laminating a positive electrode layer 10A and a negative electrode layer 20A with a solid electrolyte layer 30 disposed therebetween and a positive electrode external terminal 2 and a negative electrode external terminal 3 joined to the laminate 1A.

In the embodiment, in FIG. 1, it is assumed that a direction in which the positive electrode layer 10A and the negative electrode layer 20A in the laminate 1A are laminated is a z direction, a direction which is perpendicular to the z direction and in which the positive electrode layer 10A and the negative electrode layer 20A in FIG. 1 extend is an x direction, and a direction which is perpendicular to the x direction and the z direction is a y direction.

### [Laminate]

The laminate 1A is a substantially hexahedral body, which has an upper surface St and a lower surface Sb which are end surfaces in the lamination direction and four side surfaces parallel to the lamination direction. Of side surfaces of the laminate 1A, an end surface which is joined to the positive electrode layer 10A is referred to as a first surface S1, and an end surface which is joined to the negative electrode layer 20A is referred to as a second surface S2. In the laminate 1A, the first surface S1 and the second surface S2 are end surfaces in the x direction.

The laminate including in the all-solid-state secondary battery according to the embodiment has a void in at least one region of a region surrounded by a positive electrode layer 10 and the first surface S1, a region surrounded by the positive electrode layer 10, the solid electrolyte layer 30, and the first surface S1, a region surrounded by a negative electrode layer 20 and the second surface S2, and a region surrounded by the negative electrode layer 20, the solid electrolyte layer 30, and the second surface S2.

The laminate 1A shown in FIG. 1 has a void 50a in the region surrounded by the positive electrode layer 10 and the first surface S1 and a void 50b in the region surrounded by the negative electrode layer 20 and the second surface S2.

### <Positive electrode layer>

The positive electrode layer 10A includes a positive electrode active material. The positive electrode layer 10A includes, for example, a positive electrode current collector 11A and a positive electrode active material layer 12A provided on at least one of the main surfaces of the positive electrode current collector 11A.

The positive electrode layer 10A is joined to the positive electrode external terminal 2 at the first surface S1. The positive electrode layer 10A extends in a direction in which it is directed from the first surface S1 to the second surface S2. The positive electrode layer 10A does not extend to the second surface S2. In the embodiment, of the end portions of the positive electrode layer 10A in the x direction, the end portion on the first surface S1 side, that is, the end portion in a -x direction, is referred to as one end extending to the side surface and the end portion on the opposite side to the one end which extends, that is, the end portion in a +x direction, is referred to as one end which does not extend to the side surface.

### (Positive electrode current collector)

The positive electrode current collector 11A is made, for example, of a material with high electrical conductivity. The positive electrode current collector 11A is made of, for example, a metal or alloy containing at least one of metallic elements such as silver (Ag), palladium (Pd), gold (Au), platinum (Pt), aluminum (Al), copper (Cu), and nickel (Ni), or a non-metal such as carbon (C). An example of such an alloy is AgPd.

The positive electrode current collector 11A includes, for example, a flat portion 11Ap which extends in a direction in which it intersects the lamination direction and has a substantially flat shape and a curved portion 11Aw which is located closer to the positive electrode external terminal 2 than the flat portion 11Ap and is curved in the lamination direction. The curved portion 11Aw is attached to the positive electrode external terminal 2. An angle between the curved portion 11Aw of the positive electrode current collector 11A and the positive electrode external terminal 2 is, for example, 45° to 90° and may be 60° to 90°. The curved portion 11Aw has, for example, a shape in which it is away from the positive electrode active material layer 12A in the lamination direction as it approaches the positive electrode external terminal 2 in the x direction and may have a linear shape or a shape in which it approaches the positive electrode current collector 11A in the lamination direction as it approaches the positive electrode external terminal 2 in the x direction.

When the positive electrode layer 10A is formed of the flat portion 11Ap and the curved portion 11Aw of a current collector and a flat portion 12Ap of an active material layer, the positive electrode layer 10A has a structure in which the curved portion 11Aw of the current collector and the flat portion 12Ap of the active material layer are spaced apart. That is to say, the positive electrode layer 10A has an opening structure on one extending end side.

An angle of the curved portion 11Aw with respect to the flat portion 11Ap is, for example, greater than 0° and not greater than 45°, and preferably greater than 0° and not greater than 30°.

### (Positive electrode active material layer)

The positive electrode active material layer 12A is formed, for example, of the positive electrode active material layer flat portion 12Ap which extends in a direction in which it intersects the lamination direction and has a substantially flat shape. The flat portion 12Ap is attached to the positive electrode external terminal 2. The flat portion 12Ap, for example, forms an angle of 80° to 90° with the positive electrode external terminal 2 at one extending end.

The positive electrode active material layer 12A contains at least a known compound capable of absorbing and releasing lithium ions as a positive electrode active material. The positive electrode active material is, for example, a compound in which a more noble potential than a negative electrode active material is exhibited. The positive electrode active material layer 12A may further include a conductive assistant and an ion-conducting additive. It is preferable that the positive electrode active material be capable of efficiently inserting and desorbing lithium ions.

Such positive electrode active materials include, for example, transition metal oxides and transition metal composite oxides. Specifically, examples of the positive electrode active material include lithium manganese composite oxides Li₂MnₐMa₁₋ₐO₃ (0.8≤a≤1, Ma=Co, Ni), lithium cobalt oxides (LiCoO₂(LCO)), lithium nickel oxides (LiNiO₂), lithium manganese oxides (LiMn₂O₄) having a spinel structure, composite metal oxides represented by the general expression: LiNiₓCo_{y}Mn_{z}O₂ (x+y+z=1, 0≤x≤1, 0≤y≤1, 0≤z≤1), lithium vanadium compounds (LiV₂O₅), olivine type LiMbPO₄ (where Mb is one or more elements selected from Co, Ni, Mn, Fe, Mg, Nb, Ti, Al, and Zr), lithium vanadium phosphate (Li₃V₂(PO₄)₃(LVP) or LiVOPO₄), Li-rich solid solution positive electrode represented by Li₂MnO₃-LiMcO₂ (Mc=Mn, Co, Ni), lithium titanate (Li₄Ti₅O₁₂), titanium dioxide (TiO₂), complex metal oxides represented by LiₛNiₜCoᵤAlᵥO₂ (0.9<s<1.3, 0.9<t+u+v<1.1), and the like.

Also, in these positive electrode active materials, a part of each element may be replaced with a different element and the composition may be changed from the stoichiometric composition.

Examples of the conductive assistants include carbon materials such as carbon black, acetylene black, ketjen black, carbon nanotubes, graphite, graphene, and activated carbon, and metal materials such as gold, silver, palladium, platinum, copper, and tin.

Examples of the ion-conducting additive include a solid electrolyte. Specifically, the solid electrolyte may be made, for example, of the same material as that used for the solid electrolyte layer 30.

When a solid electrolyte is used as the ion-conducting additive, it is preferable that the ion-conducting additive and the solid electrolyte used in the solid electrolyte layer 30 be made of the same material.

### <Negative electrode layer>

The negative electrode layer 20A contains a negative electrode active material. The negative electrode layer 20A has, for example, a negative electrode current collector 21A and a negative electrode active material layer 22A provided on at least one of the main surfaces of the negative electrode current collector 21A. The negative electrode active material layer 22A is located, for example, on the inside in the lamination direction with respect to the negative electrode current collector 21A.

The negative electrode layer 20A is attached to the negative electrode external terminal 3 at the second surface S2. The negative electrode layer 20A extends in a direction in which it is directed from the second surface S2 to the first surface S1. The negative electrode layer 20A does not extend to the first surface S1. In the embodiment, of the end portions of the negative electrode layer 20A in the x direction, the end portion on the second surface S2 side, that is, the end portion in the +x direction, is referred to as one extending end on the side surface and the end portion opposite to the one extending end, that is, the end portion in the -x direction, is referred to as one end that does not extend to the side surface.

The negative electrode current collector 21A is formed, for example, of a flat portion 21Ap which extends in a direction in which it intersects the lamination direction and has a substantially flat shape. The negative electrode active material layer 22A has, for example, a flat portion 22Ap which extends in a direction in which it intersects the lamination direction and has a substantially flat shape and a curved portion 22Aw which is located closer to the negative electrode external terminal 3 than the flat portion 22Ap and is curved in the lamination direction.

The curved portion 22Aw is attached to the negative electrode external terminal 3. An angle between the curved portion 22Aw of the negative electrode active material layer 22A and the negative electrode external terminal 3 is, for example, 45° to 90° and may be 60° to 90°. The curved portion 22Aw has a shape in which it is, for example, away from the negative electrode current collector 21A in the lamination direction as it approaches the negative electrode external terminal 3 in the x direction and may have a linear shape or a shape in which it approaches the negative electrode current collector 21A in the lamination direction as it approaches the negative electrode external terminal 3 in the x direction.

When the negative electrode layer 20A is formed of the flat portion 21Ap, the flat portion 22Ap, and the curved portion 22Aw in this way, the negative electrode layer 20A has a structure in which the flat portion 21Ap and the curved portion 22Aw are spaced apart from each other. That is to say, the negative electrode layer 20A has an opening structure on one extending end.

An angle of the curved portion 22Aw with respect to the flat portion 21Ap is, for example, 45° or less, and preferably 30° or less.

### (The negative electrode current collector)

The negative electrode current collector 21A is made, for example, of a material with high electrical conductivity. The negative electrode current collector 21A can be made, for example, of the same material as the positive electrode current collector 11A.

### (Negative electrode active material layer)

The negative electrode active material layer 22A contains at least a known compound capable of absorbing and releasing lithium ions as a negative electrode active material. The negative electrode active material is, for example, a compound in which a lower potential than a positive electrode active material is exhibited. The negative electrode active material layer 22A may contain, in addition to the negative electrode active material, a conductive assistant and an ion-conducting additive. It is preferable that the negative electrode active material be capable of efficiently inserting and extracting lithium ions.

### <Solid electrolyte layer>

The solid electrolyte layer 30 has, for example, an interlayer solid electrolyte layer 31 disposed between the positive electrode layer 10A and the negative electrode layer 20A and a margin layer 32 disposed next to the positive electrode layer 10A and the negative electrode layer 20A. In the embodiment, a layer of a solid electrolyte located further outward than the electrode layer of the endmost end portion in the lamination direction may also be referred to as an interlayer solid electrolyte layer in some cases.

It is preferable that the solid electrolyte layer 30 be made of a material which has low electronic conductivity and high lithium ion conductivity. For example, it is preferable that the solid electrolyte layer 30 be at least one selected from the group consisting of perovskite compounds such as La_{0.5}Li_{0.5}TiO₃, lisicone type compounds such as Li₁₄Zn(GeO₄)₄, garnet-type compounds such as Li₇La₃Zr₂O₁₂, LiZr₂(PO₄)₃, and Li₁₊ₓAlₓTi₂₋ₓ(PO₄)₃; nasicon-type compounds such as LATP(Li_{1.3}Al_{0.3}Ti_{1.7}(PO₄)₃ and Li_{1.5}Al_{0.5}Ge_{1.5}(PO₄)₃), thiolisicone-type compounds such as Li_{3.25}Ge_{0.25}P_{0.75}S₄ and Li₃PS₄, glass compounds such as Li₂S-P₂S₅ and Li₂O-V₂O₅-SiO₂, and phosphate compounds such as Li₃PO₄, Li_{3.5}Si_{0.5}P_{0.5}O₄(LSPO), and Li_{2.9}PO_{3.3}N_{0.46}.

It is preferable that a thickness of the interlayer solid electrolyte layer 31 be within the range of, for example, 0.5 µm to 20.0 µm. By increasing the thickness of the interlayer solid electrolyte layer 31, the effect of suppressing short circuits between the positive electrode layer 10A and the negative electrode layer 20A which have the interlayer solid electrolyte layer 31 disposed therebetween can be more easily obtained. Furthermore, by setting the thickness of the interlayer solid electrolyte layer 31 to 20.0 µm or less, a migration distance of lithium ions can be shortened, making it easier to reduce the internal resistance.

As shown in FIG. 1, the laminate 1A may include a solid electrolyte and a margin layer 32 disposed adjacent to each of the positive electrode layer 10A and the negative electrode layer 20A. The margin layer 32 may be regarded to be a part of the solid electrolyte layer 30.

The margin layer 32 is provided to eliminate, for example, a step between the positive electrode layer 10A and the interlayer solid electrolyte layer 31 at one end thereof which does not extend and a step between the negative electrode layer 20A and the interlayer solid electrolyte layer 31 at one end thereof that does not extend. For this reason, the margin layer 32 is formed, for example, on the main surface of the interlayer solid electrolyte layer 31 at one end of each electrode layer which does not extend at a height substantially equal to that of the positive electrode layer 10A or the negative electrode layer 20A (that is, so that it is disposed alongside each of the positive electrode layer 10A and the negative electrode layer 20A). Since the steps in the interlayer solid electrolyte layer 31 and the positive electrode layer 10A as well as the interlayer solid electrolyte layer 31 and the negative electrode layer 20A are eliminated using the margin layer 32, the compactness of the solid electrolyte layer 30 at one end in which each of the electrode layers does not extend and each of the electrode layers are increased. In addition, even if processing is performed to create void, as will be described below, this makes it less likely that delamination will occur during firing of the all-solid-state secondary battery and that unintended warping will occur in the one end which does not extend. A distance between the end portion of the positive electrode layer 10A and the second surface S2 at one end which does not extend and a distance between the end portion of the negative electrode layer 20A and the first surface S1 are, for example, the same. FIG. 1 shows the all-solid-state secondary battery 100A in which the distance between the end portion of the positive electrode layer 10A and the second surface S2 at one end which does not extend and the distance between the end portion of the negative electrode layer 20A and the first surface S1 are the same and the distances are indicated by reference symbol L₃₂.

### <Void>

On one extending end side, the positive electrode layer 10A has the open structure as described above so that the void 50a is formed between the positive electrode layer 10A and the first surface S1. The void 50a is defined in the positive electrode layer 10A and the first surface S1. More specifically, the void 50a is defined using the current collector flat portion 11Ap, the curved portion 12Aw, and the first surface S1. The void 50a has a length L50a in the x direction and a length (height) h50a in the z direction.

An angle θ₅₀ₐ of the void 50a, which is an angle formed by two layers of the void 50a which define a corner of the void 50a, is, for example, 45° or less, and preferably 30° or less. In the example shown in FIG. 1, the two layers which define the corner of the void 50a are the positive electrode current collector 11A and the positive electrode active material layer 12A, and more specifically, the positive electrode current collector flat portion 11Ap and a curved portion 12w. The angle of the void 50a can be calculated, for example, on the basis of the length L50a and the height h50a. That is to say, the shape of the void 50a is regarded to have a right-angled triangle shape in which the positive electrode active material layer 12A and the first surface S1 are perpendicular to each other, and for example, if (height h50a/length L50a)² is 1/3 or less, it is confirmed that the angle θ₅₀. formed by the curved portion 11Aw of the positive electrode current collector 11A and the positive electrode active material layer flat portion 12Ap through the void 50a is 30° or less. Similarly, the shape of the void 50b is regarded to have a right-angled triangle shape in which the negative electrode current collector 21A and the second surface S2 intersect at right angles, and for example, if (height h50b/length L50b)² is 1/3 or less, it is confirmed that the angle θ_{50b} formed by the curved portion 22Aw of the negative electrode active material layer 22A and the void 50b of the negative electrode current collector 21A is 30° or less.

As described above, in an in-plane direction of the positive electrode layer 10A, a distance between the negative electrode layer 20A and the first surface S1 and a distance between the positive electrode layer 10A and the second surface S2 are, for example, substantially equal and are indicated by reference symbol L₃₂. Ratios (L₅₀ₐ/L₃₂) and (L_{50b}/L₃₂) of the lengths L₅₀ₐ, L_{50b} of the voids 50a, 50b to the length L₃₂ are, for example, 5 to 150, preferably 20 to 100%, and more preferably 50% to 100%. When the ratio (L₅₀ₐ/L₃₂) is 20 or more, the stress caused by the expansion and contraction of the electrode active material layer during charging and discharging can be further alleviated. Furthermore, by making the ratios (L₅₀ₐ/L₃₂) and (L_{50b}/L₃₂) 100% or less, the void becomes excessively large and the movement of carriers and electrons is less likely to be hindered.

### [Method for producing all-solid-state secondary battery]

The all-solid-state secondary battery 100A can be produced, for example, through the following procedure using a simultaneous firing method. The simultaneous firing method is a method for producing a laminate by simultaneously firing different materials that are base materials of the laminate. When the simultaneous firing method is used, the number of steps required for the production of an all-solid-state secondary battery 100 can be reduced. Furthermore, the laminate 1A obtained using the simultaneous firing method is denser. A case in which the simultaneous firing method is used will be explained below.

The method for producing an all-solid-state secondary battery according to the embodiment has, for example, a pasting step of creating pastes of materials constituting a laminate, a solid electrolyte layer sheet preparation step of applying and drying a paste for a solid electrolyte to prepare a solid electrolyte layer sheet, an electrode unit preparation step of forming a positive electrode layer and a negative electrode layer on the solid electrolyte layer sheet to prepare a positive electrode unit and a negative electrode unit, a lamination step of alternately laminating the positive electrode unit and the negative electrode unit to prepare a base material of a laminate, and a firing step of simultaneously firing the prepared base materials of the laminate. The steps will be explained below in more detail.

### (Pasting step)

First, materials of the positive electrode current collector 11A, the positive electrode active material layer 12A, the solid electrolyte layer 30, the negative electrode current collector 21A, and the negative electrode active material layer 22A are formed into pastes. A method for forming a paste is not particularly limited. For example, a paste can be obtained by mixing powders of each of the materials with a vehicle. Here, the vehicle is a general term for a medium in a liquid phase. The vehicle includes a solvent and a binder. Although the binder contained in the paste is not particularly limited, a polyvinyl acetal resin, a cellulose resin, an acrylic resin, a urethane resin, a vinyl acetate resin, polyvinyl alcohol resin, or the like can be used. Through such a method, a paste for a positive electrode current collector, a paste for a positive electrode active material layer, a paste for a solid electrolyte layer, a paste for a negative electrode active material layer, and a paste for a negative electrode current collector are prepared. Furthermore, a resin paste for forming void is separately prepared in a similar manner. The resin paste contains only a resin as a solid content and this portion becomes void after firing. The resin may be, for example, ethyl cellulose, acrylic, or the like, as long as it melts when heated to a high temperature of, for example, 400°C or higher, and then vaporizes and is removed from the laminate.

### (Solid electrolyte layer formation step)

Subsequently, a solid electrolyte layer sheet is formed by applying and drying a paste for a solid electrolyte. For example, a solid electrolyte layer sheet is formed by forming a paste for a solid electrolyte layer on a PET film so that it has a sheet shape through a doctor blade method and drying it.

### (Electrode unit preparation step)

Subsequently, a positive electrode unit and a negative electrode unit are prepared by forming a positive electrode layer and negative electrode layer on the solid electrolyte layer sheet. The solid electrolyte layer sheet is, for example, a solid electrolyte layer sheet which becomes the interlayer solid electrolyte layer 31 after lamination and firing. For example, first, a paste for a positive electrode active material layer is formed on the solid electrolyte layer sheet. The paste for a positive electrode active material layer is applied, for example, through screen printing, and then dried. Subsequently, a resin portion is formed on a base material of the positive electrode active material layer and at one end in the in-plane direction of the base material of the positive electrode active material layer, for example, by applying a resin paste through screen printing. Subsequently, for example, a paste for a positive electrode current collector is screen printed and dried. For example, the paste for a positive electrode current collector is screen printed so that it and the resin portion and base materials for positive electrode active material layers overlap, and then dried. Moreover, a base material of a margin layer having substantially the same height as the base material of the positive electrode layer is formed by screen printing a paste for a margin layer on a region other than the positive electrode layer of the solid electrolyte layer sheet and drying it. The paste for a margin layer may be made of, for example, the same material as that used for the paste for a solid electrolyte layer. Subsequently, a PET film is peeled off. **In** this way, a positive electrode unit obtained by forming the positive electrode current collector on the base material of the solid electrolyte layer and forming the resin portion and the base material for the positive electrode active material layer on it is prepared. The negative electrode unit is prepared in the same procedure as in the positive electrode unit.

### (Lamination step)

Subsequently, a base material for a laminate is prepared by performing offsetting so that the active material layers of the positive electrode unit and the negative electrode unit are laminated alternately with a solid electrolyte layer sheet between them and the one ends do not overlap so that lamination is performed. On the outer sides of the positive electrode unit and the negative electrode unit in the lamination direction, for example, a solid electrolyte layer sheet is formed. Here, when a series-type all-solid-state secondary battery is prepared instead of a parallel-type all-solid-state secondary battery, lamination may be performed without offsetting so that one end of the base material of the positive electrode layer in the positive electrode unit and one end of the base material of the negative electrode layer overlap without performing the offsetting described above.

The base material for a laminate can be pressed all at once using a mold press, a warm isostatic press (WIP), a cold isostatic press (CIP), an isostatic press, or the like to increase adhesion. The pressurization is preferably carried out under heating, and for example, can be carried out at 40 to 95°C. The base material for a laminate is cut and formed using, for example, a dicing device.

Subsequently, the laminate 1A is produced by firing the base material of the laminate produced through the above procedure. It is preferable to carry out a binder removal step before firing the laminate (binder removal step).

### (Binder removal step)

By heating in advance and decomposing a binder component contained in the base material for a laminate before firing by carrying out the binder removal step, excessive and rapid decomposition of the binder component in the firing step can be suppressed. The binder removal step can be performed by placing the prepared base material for a laminate on a ceramic setter for a pedestal, for example, in a nitrogen atmosphere within a temperature range of 300°C to 800°C for 0.1 to 10 hours. If the atmosphere is a reducing atmosphere, the binder removal step may be performed in, for example, an argon atmosphere or a mixed nitrogen/hydrogen atmosphere instead of a nitrogen atmosphere. Furthermore, as long as the metal current collector does not oxidize, a reducing atmosphere in which a small amount of oxygen is included may be used.

### (Firing step)

Subsequently, the laminate 1A can be obtained by subjecting the base material for a laminate to heat treating in a nitrogen atmosphere within a temperature range of 600°C to 1000°C. A firing time is, for example, 0.1 to 3 hours. If the atmosphere is a reducing atmosphere, the firing may be carried out in, for example, an argon atmosphere or a mixed atmosphere of nitrogen and hydrogen instead of a nitrogen atmosphere.

**In** the method for producing the all-solid-state secondary battery 100A according to the embodiment, in order to prepare the all-solid-state secondary battery in which a curved portion is provided in a part of the electrode layer and void is formed between the electrode layer and a side surface of a laminate attached to the electrode layer, after using the resin, a device having a pedestal, a cover, and a stand can be used in the firing step. For example, a pedestal and a cover having a base material of a laminate disposed therebetween from both sides in a lamination direction and a stand located between the pedestal and the cover and disposed in the in-plane direction of the base material of the laminate are used. Specifically, as follows, the all-solid-state secondary battery 100A can be produced using a ceramic setter or the like.

In the firing step, in order to produce the laminate 1A having a desired warpage, a method in which a ceramic setter for a cover for controlling an amount of warping is disposed at a height position h₁ obtained by adding a height increase amount Δh corresponding to a desired warpage angle after firing to a height (height h₀ of the side surface of the laminate from the ceramic setter for a pedestal) of the side surface of the laminate before firing using the fact that, if rapid firing is performed, warping is more likely to occur so that the laminate does not further warp can be used. This method includes providing a gap between the ceramic setter for a cover and the laminate to form the desired warpage angle. A height position of the ceramic setter for a cover can be easily adjusted by disposing laminates for adjusting a height and ceramic plates for adjusting a height at four corners of the ceramic setter for a pedestal. For example, when a gap between the laminate and the ceramic setter for a cover before firing is desired to have 10 µm, laminates for adjusting a height obtained by placing ceramic plates for adjusting a height with a thickness of 10 µm on the laminate before firing may be disposed at four corners of the ceramic setter for a pedestal. Furthermore, rapid firing refers to, for example, firing at a temperature rise rate of 1000°C/hour or higher. In addition, it is preferable that the ceramic setters for a pedestal and a cover be smooth ceramic setters to better control warping. For example, a ceramic setter whose main surface is polished can be used. Moreover, the ceramic setter may be a dense substrate or a porous substrate having holes. The material is preferably a material whose firing temperature is higher than the firing temperature of the laminate and is preferably, for example, zirconia, alumina, and the like. In this way, the laminate 1A can be prepared.

Also, alternatively, the all-solid-state secondary battery 100A having the void 50a, 50b can be produced by, for example, printing a resin portion using a 3D printer or the like so that it has voids, each with a desired shape. In the above method, for example, the resin portion is formed so that a thickness increases toward the electrode terminal.

### (Terminal formation)

Subsequently, the positive electrode external terminal 2 and the negative electrode external terminal 3 are formed on the first surface S1 and the second surface S2 of the fired side surface of the laminate 1A, respectively. The positive electrode external terminal 2 and the negative electrode external terminal 3 are formed to be attached to the positive electrode layer 10A and the negative electrode layer 20A, respectively. The positive electrode external terminal 2 and the negative electrode external terminal 3 can be formed, for example, on the positive electrode layer 10A and the negative electrode layer 20A exposed from the side surfaces of the laminate 1A through known means such as sputtering, dip coating, screen printing, spray coating, or the like. When the positive electrode external terminal 2 and the negative electrode external terminal 3 are formed to be attached only to predetermined portions, they can be formed after applying masking using, for example, a tape.

According to the all-solid-state secondary battery 100A of the embodiment, by providing the void 50a in the region surrounded by the positive electrode current collector 11A, the positive electrode active material layer 12A, and the first surface S1 and providing the void 50b in the region surrounded by the negative electrode active material layer 22A, the negative electrode current collector 21A, and the second surface S2, when the positive electrode active material and the negative electrode active material expand and contract during charging and discharging, the stress acting on the solid electrolyte layer 30 can be relieved using the voids50a and 50b in contact with the positive electrode active material layer 12A and the negative electrode active material layer 22A, respectively. Thus, the occurrence of cracks, in the solid electrolyte layer 30, which are directed to the negative electrode layer 20A or the negative electrode external terminal 3 from one end of the positive electrode active material layer 12A which does not extend or cracks which are directed to the positive electrode layer 10A or the positive electrode external terminal 2 from one end of the negative electrode active material layer 22A which does not extend can be suppressed. Therefore, the all-solid-state secondary battery 100A can suppress the occurrence of a short circuit. The all-solid-state secondary battery 100A has the void 50a, 50b at a position in which it contacts the electrode active material layer. Thus, the all-solid-state secondary battery 100A is more likely to absorb stress from the electrode active material layer. The first surface S1 and the second surface S2 correspond, for example, to the inner surfaces of the positive electrode external terminal 2 and the negative electrode external terminal 3, respectively.

### [Modified example]

The all-solid-state secondary battery according to the embodiment is not limited to the all-solid-state secondary battery 100A shown in FIG. 1 and various modifications are possible within the scope of the claims.

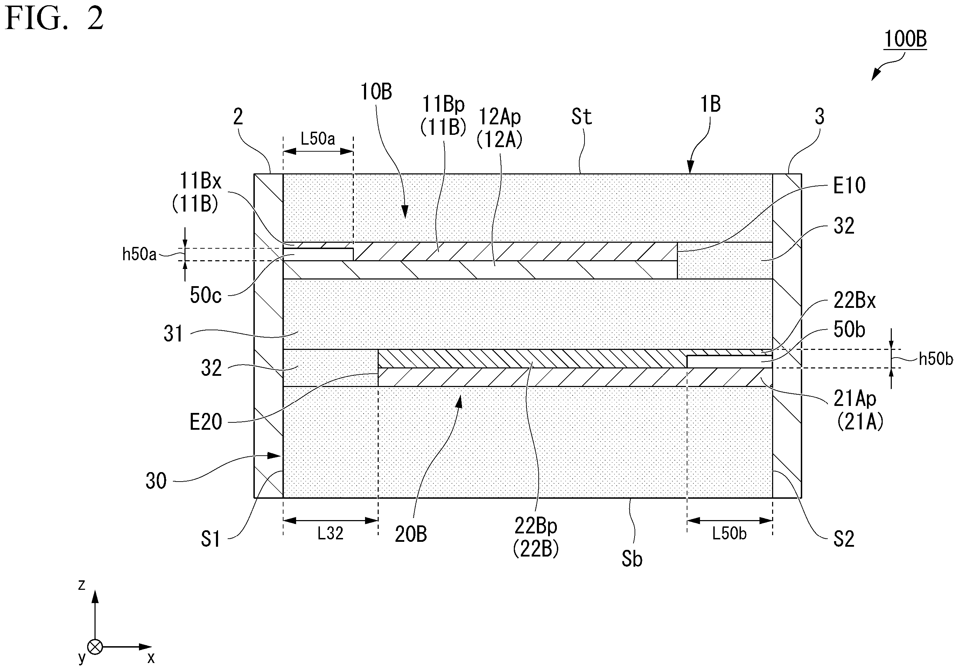

For example, the all-solid-state secondary battery according to the embodiment may be the all-solid-state secondary battery as shown in FIGS. 2 to 4. In the all-solid-state secondary battery according to the modified example, configurations similar to those of the all-solid-state secondary battery 100A are denoted by similar reference symbols and descriptions thereof will be omitted.

FIG. 2 is a cross-sectional view showing a modified example of the all-solid-state secondary battery of FIG. 1. In an all-solid-state secondary battery 100B shown in FIG. 2, shapes of a void 50c formed in the region surrounded by the positive electrode layer 10B and the first surface S1 and a void 50d formed in the region surrounded by the negative electrode layer 20B and the second surface S2 are different from those of the all-solid-state secondary battery 100A shown in FIG. 1.

The all-solid-state secondary battery 100B includes a laminate 1B in which the positive electrode layer 10B and the negative electrode layer 20B are laminated with the solid electrolyte layer 30 disposed therebetween.

The positive electrode layer 10B includes, for example, a positive electrode current collector 11B and a positive electrode active material layer 12A provided on the main surface inward in the lamination direction of the positive electrode current collector 11B. The positive electrode current collector 11B has a flat portion 11Bp and an extension portion 12Bx which is located closer to the positive electrode external terminal 2 side than the flat portion 11Bp and attached to the positive electrode external terminal 2. An extension portion 11Bx is, for example, a region which is thinner than the flat portion 11Bp and has a substantially rectangular cross-sectional shape and is in contact with the solid electrolyte layer 30. In the positive electrode layer 10B, the void 50c is formed in a region surrounded by the extension portion 12Bx, the flat portion 12Bp, the positive electrode active material layer 12A, and the first surface S1.

The negative electrode layer 20B includes, for example, the negative electrode current collector 21A and a negative electrode active material layer 22B provided on the main surface inward in the lamination direction of the negative electrode current collector 21A. The negative electrode active material layer 22B has a flat portion 22Bp and an extension portion 22Bx which is located closer to the negative electrode external terminal 3 side than the flat portion 22Bp and attached to the negative electrode external terminal 3. The extension portion 22Bx is, for example, a region which is thinner than the flat portion 21Bp and has a substantially rectangular cross-section shape and is in contact with the solid electrolyte layer 30. In the negative electrode layer 20B, the void 50d is formed in a region surrounded by the extension portion 22Bx, the flat portion 22Bp, the negative electrode current collector 21A, and the second surface S2.

The voids 50c, 50d having a substantially rectangular cross-sectional shape as shown in FIG. 2 have an angle of, for example, 0° formed through the two layers (the positive electrode current collector 11B and the positive electrode active material layer 12B, the negative electrode current collector 21A and the negative electrode active material layer 22B) of the voids 50c, 50d which define the voids 50c, 50d. The voids 50c and 50d have a substantially constant height in the lamination direction from the end portion in the +x direction to the end portion in the -x direction.

The all-solid-state secondary battery 100B can be produced by changing the conditions of the firing step from the method for producing the all-solid-state secondary battery 100A while keeping the other conditions the same. When the all-solid-state secondary battery 100B having the voids 50c and 50d each having a substantially rectangular cross-sectional shape is produced, a method in which a ceramic setter for a cover for controling the amount of warping can be placed at the height (height h0 of the side surface of the laminate from the ceramic setter for a pedestal above) of the side surface of the laminate before firing, thereby preventing the base material of the laminate from warping can be used. In this method, a gap is not provided between the ceramic setter for a cover and the laminate to form a desired warpage angle. Furthermore, when the all-solid-state secondary battery 100B is produced, rapid firing is not necessarily required and a gradual temperature rise rate may be used.

Also in the case of the all-solid-state secondary battery 100B, the voids 50c and 50d relieve the stress caused by the expansion and contraction of the electrode active material during charging and discharging, and thus it is possible to prevent cracks from occurring in the solid electrolyte layer 30 in a direction from one end of the electrode layer which does not extend toward an electrode layer having a polarity different from that of the electrode layer or toward the electrode external terminal.

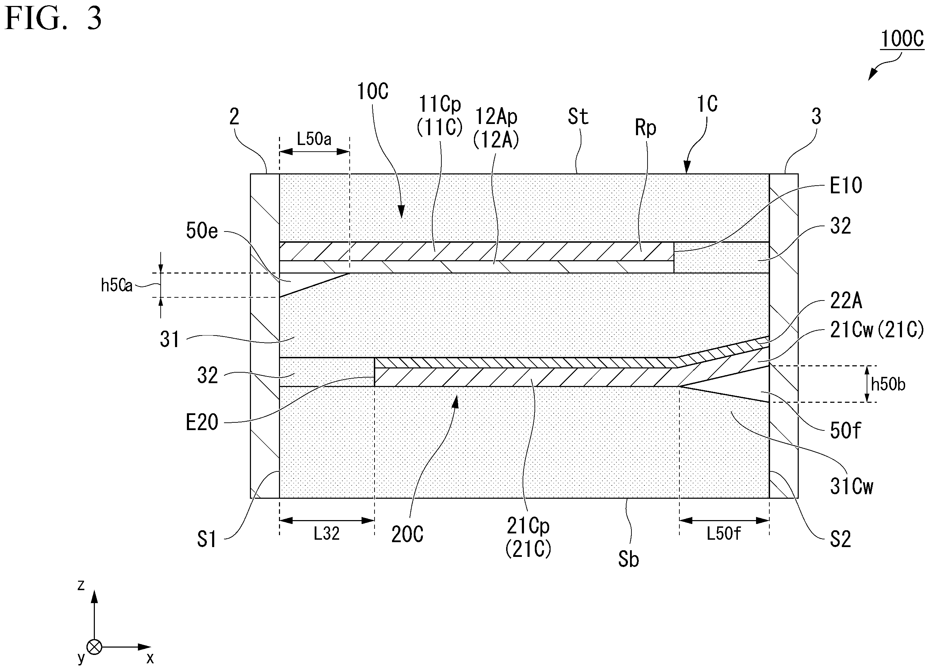

FIG. 3 is a cross-sectional view showing another modified example of the all-solid-state secondary battery of FIG. 1. The all-solid-state secondary battery 100C shown in FIG. 3 has a void 50e in the region surrounded by the positive electrode layer 10C, the solid electrolyte layer 30, and the first surface S1 and has a void 50f in the region surrounded by the negative electrode layer 20C, the solid electrolyte layer 30, and the second surface S2. Two adjacent layers which define a corner of the void 50f are a negative electrode current collector 21C and a solid electrolyte layer 31, and more specifically, a negative electrode current collector curved portion 21Cw and a solid electrolyte layer curved portion 31Cw. An angle of the void 50f is calculated, for example, on the basis of the length L50f and the height h50f. The solid electrolyte layer curved portion 31Cw is a region of the solid electrolyte layer in which the solid electrolyte layer and the curved portion 21Cw overlap in the lamination direction and which has the void 50f placed between the curved portion 21Cw and the curved portion 31Cw. The solid electrolyte layer curved portion 31Cw is peeled off from the negative electrode current collector 21C.

The positive electrode layer 10C has, for example, a positive electrode current collector 11C composed of a flat portion 11Cp**,** and the positive electrode active material layer 12A which is provided inside the positive electrode current collector 11C in the lamination direction and composed of the flat portion 11Ap. Near one extending end of the positive electrode layer 10C, the interlayer solid electrolyte layer 31 is, for example, missing and has a curved portion.

The negative electrode layer 20C includes, for example, the negative electrode active material layer 22A and the negative electrode current collector 21C having a flat portion 21Cp and a curved portion 21Cw. The negative electrode current collector 21C has, for example, the flat portion 21Cp which extends in a direction intersecting the lamination direction and has a substantially flat shape and a curved portion 21Cw which is located closer to the negative electrode external terminal 3 than the flat portion 21Cp and is curved in the lamination direction.

The all-solid-state secondary battery 100C can be produced by changing the conditions of the firing step from the method for producing the all-solid-state secondary battery 100A while keeping the other conditions the same. In order to form the void 50e in the region surrounded by the positive electrode layer 10C, the solid electrolyte layer 30, and the first surface S1, for example, at the time of forming a positive electrode unit, after applying a paste for a solid electrolyte layer, a resin paste may be applied to one end in an in-plane direction to form a resin portion and a paste for a positive electrode active material layer and a paste for a positive electrode current collector are printed and dried in that order so that they and the resin portion overlap. Furthermore, in order to form the void 50f in the region surrounded by the negative electrode layer 20, the solid electrolyte layer 30, and the second surface S2, for example, after applying a paste for a solid electrolyte layer, a resin paste may be applied to one end in an in-plane direction to form a resin portion and a paste for a negative electrode current collector and a paste for a negative electrode current collector may be printed in this order so that they and the resin portion overlap, are dried, and then are fired.

Also, when the all-solid-state secondary battery 100C which comprises a laminate 1C including the positive electrode layer 10C composed of a flat portion and the negative electrode layer 20C having a curved portion as shown in FIG. 3 is produced, a cover of the ceramic setter on one end side in which a positive electrode extends may be disposed at a height h₀ from the ceramic setter for a pedestal to the side surface of the laminate so that the positive electrode layer 10C does not warp, a cover of the ceramic setter on one end side in which a negative electrode extends may be disposed at a position higher than the height h₀ so that the negative electrode layer 20C does not warp, and the firing step may be performed.

The all-solid-state secondary battery 100C also provides the same effects as in the all-solid-state secondary batteries 100A and 100B.

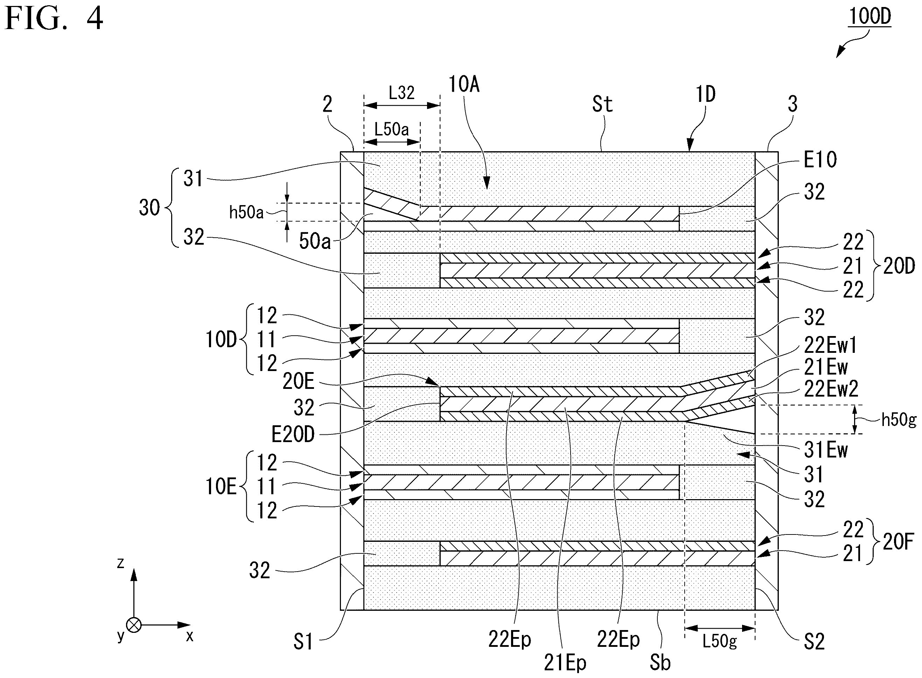

FIG. 4 is a cross-sectional view showing another modified example of the all-solid-state secondary battery of FIG. 1. A laminate 1D of an all-solid-state secondary battery 100D shown in FIG. 4 includes the plurality of positive electrode layers 10A, 10D, and 10E and the plurality of negative electrode layers 20D, 20E, and 20F. In the all-solid-state secondary battery 100D, the positive electrode layers 10 and the negative electrode layers 20 are alternately laminated with the solid electrolyte layer 30 interposed therebetween. The laminate 1D has the voids 50a and 50g in the region surrounded by the positive electrode layer 10A and the first surface S1 and the region surrounded by the negative electrode layer 20E, the solid electrolyte layer 30, and the second surface S2.

Among a plurality of electrode layers composed of the plurality of positive electrode layers 10A, 10D, and 10E and the plurality of negative electrode layers 20D, 20E, and 20F, the positive electrode layer 10A and the negative electrode layer 20F located at the endmost end portions in the lamination direction are each formed of, for example, a current collector and an active material layer provided inside the current collector in the lamination direction. Among the plurality of electrode layers, the electrode layers in which the positive electrode layer 10A and the negative electrode layer 20F located at the endmost end portion in the lamination direction are excluded have, for example, a current collector and an active material layer provided on both sides of the main surface of the current collector. For example, the positive electrode layers 10D and 10E include a positive electrode current collector 11 and a positive electrode active material layer 12 provided on both sides of the main surface of the positive electrode current collector 11. The negative electrode layer 20D has a negative electrode current collector 21 and a negative electrode active material layer 22 provided on both sides of the main surface of the negative electrode current collector 21. The negative electrode layer 20E includes a negative electrode current collector and negative electrode active material layers 22Ew1 and 22Ew2 disposed on either side of the main surface of the negative electrode current collector. The negative electrode layer 20E has, for example, the negative electrode current collector having a flat portion 21Ep which extends in a direction intersecting the lamination direction and has a substantially flat shape and a curved portion 21Ew which is located closer to the negative electrode external terminal 3 than the flat portion 21Bp and curved in the lamination direction and the negative electrode active material layers 22Ew1 and 22Ew2 having a flat portion 22Ep which extends in a direction intersecting the lamination direction and has a substantially flat shape and a curved portion 22Ew which is located closer to the negative electrode external terminal 3 than the flat portion 22Bp and curved in the lamination direction. Furthermore, a region of the solid electrolyte layer in which the solid electrolyte layer and the curved portion 22Ew overlap in the lamination direction and which has the void 50g placed between the solid electrolyte layer and the curved portion 22Ew is referred to as a solid electrolyte layer curved portion 31Ew. The solid electrolyte layer curved portion 31Ew is peeled off from the negative electrode active material layer 22E. The void 50g has, for example, a length L50g in the x direction and a height h50g in the z direction. An angle between the negative electrode active material layer 22Ew2 and the interlayer solid electrolyte layer 31 that are two adjacent layers which define the void 50g is calculated, for example, on the basis of the length L50g and the height h50g.

In the all-solid-state secondary battery 100D, one of the total four outermost positive electrode layers and outermost negative electrode layers located in the lamination direction (the endmost end portion) of the plurality of positive electrode layers and negative electrode layers is in contact with the void 50a. The outermost positive electrode layer and the outermost negative electrode layer come into contact with the void, making it easier to obtain the effect of suppressing cracking.

In the all-solid-state secondary battery with the plurality of positive electrode layers and the plurality of negative electrode layers such as the all-solid-state secondary battery 100D, a ratio of a sum of the number of positive electrode layers in contact with the void and the number of negative electrode layers in contact with the void to the total number of the plurality of positive electrode layers 10A, 10D, and 10E and the plurality of negative electrode layers 20D, 20E, and 20F is preferably 10% or more, preferably 15% or more, and more preferably 20% or more. When the ratio of the electrode layer in contact with the void to the total number of the plurality of positive electrode layers and negative electrode layers is within the above range, in the all-solid-state secondary battery which has the plurality of positive and negative electrode layers, the electrode active material expands and contracts during charging and discharging, which causes stress at various positions and there is a risk of cracks occurring at various positions in the laminate. Here, in the laminate 1D, the proportion of the electrode layer in contact with the void is 10% or more so that the stress on the solid electrolyte layer 30 caused by the expansion and contraction of the active material during charging and discharging can be mitigated at various positions in the laminate 1D, making it easier to achieve the effect of suppressing cracking.

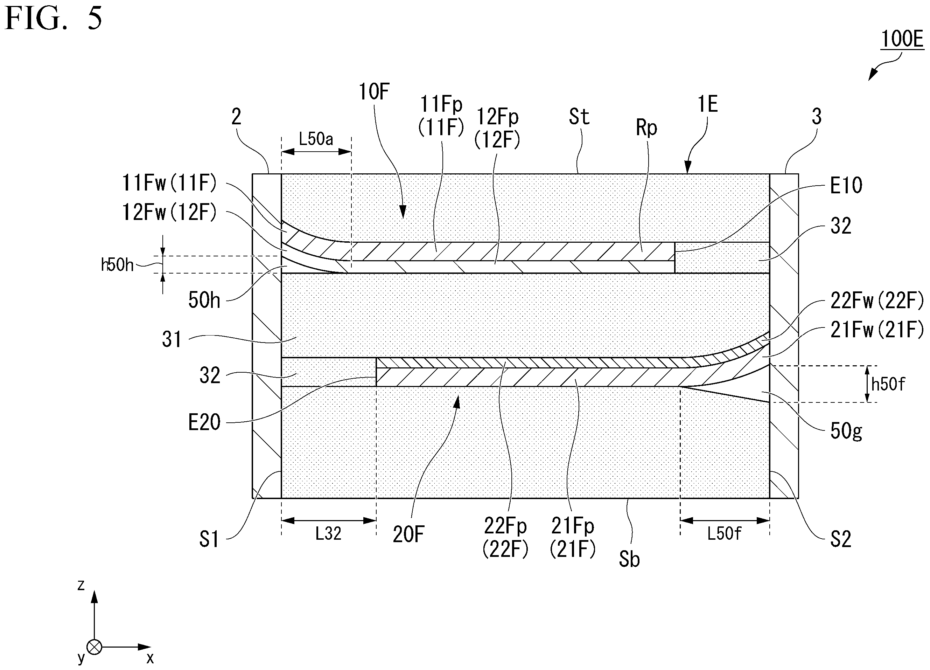

FIG. 5 is a cross-sectional view showing another modified example of the all-solid-state secondary battery of FIG. 1. An all-solid-state secondary battery 100E shown in FIG. 4 includes a positive electrode layer composed of the positive electrode current collector 11F and the positive electrode active material layer 12F and a negative electrode layer composed of the negative electrode current collector 21F and the negative electrode active material layer 22F.

The positive electrode current collector 11F has a flat portion 11Fp which has a substantially flat shape and a curved portion 11Fw which is located closer to the positive electrode external terminal 2 side than the flat portion 11Fp and curved in the lamination direction. The positive electrode active material layer 12F has a flat portion 12Fp which has a substantially flat shape and a curved portion 12Fw which is located closer to the positive electrode external terminal 2 side than the flat portion 12Fp and curved in the lamination direction.

As shown in FIG. 5, in the all-solid-state secondary battery according to the embodiment, the positive electrode current collector 11F and the positive electrode active material layer 12F which constitute the positive electrode layer 10F and the negative electrode current collector 21F and the negative electrode active material layer 22F which constitute the negative electrode layer 20F all have a convex shape in the -z direction. Such an all-solid-state secondary battery 100E also provides the same effects as in the all-solid-state secondary battery according to the above embodiment.

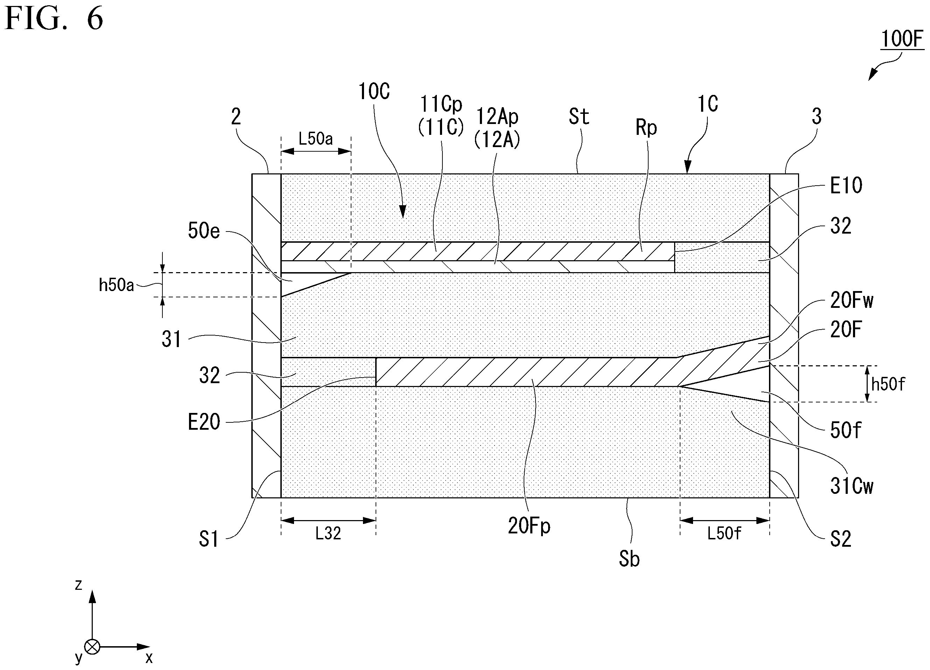

FIG. 6 is a cross-sectional view showing another modified example of the all-solid-state secondary battery of FIG. 1. In an all-solid-state secondary battery 100F shown in FIG. 6, at least one of electrode layers included in a positive electrode layer and a negative electrode layer includes a material which functions as both an electrode active material and an electrode current collector. In the example shown in FIG. 6, the negative electrode layer 20F includes a material which functions as both the negative electrode active material and the negative electrode current collector, and for example, is formed of the material. An electrode layer of the positive electrode layer and the negative electrode layer which includes a material functioning as both the electrode active material and the electrode current collector may be referred to as an integrated layer in some cases. It can be said that, in the integrated layer, the electrode active material layer and the electrode current collector layer are integrated.

An example of a material having the functions of both the negative electrode active material and the negative electrode current collector is AgPd, but it may also be a Si alloy, a Sn alloy, or the like. The negative electrode layer 20F may contain, for example, AgPd or the like or may be made of an AgPd alloy.

Also, in the example shown in FIG. 6, the integrated layer has, for example, a flat portion 20Fp and a curved portion 20Fw. The integrated layer has, for example, the flat portion 20Fp which extends in a direction intersecting the lamination direction and has a substantially flat shape and the curved portion 20Fw which is located closer to the negative electrode external terminal 3 than the flat portion 20Fp and curved in the lamination direction.

An angle formed by the curved portion 20Fw and the negative electrode external terminal 3, a shape of the curved portion 20Fw, and an angle formed by the flat portion 20Fp and the curved portion 20Fw can be similar to those in the above embodiment. The void 50f is defined by the negative electrode layer 20F, the solid electrolyte layer 31, and the second surface S2. An angle, a length L50f, and a height h50f of the void 50f are the same as those in the above embodiment and are calculated in the same manner.

Although FIG. 6 shows an example in which the negative electrode layer is the integrated layer, the positive electrode layer may also be the integrated layer. Furthermore, although FIG. 6 shows an example in which the negative electrode layer 20F has the flat portion 20Fp and the curved portion 20Fw, the negative electrode layer 20F may be constituted to only have the flat portion 20Fp.

In the embodiment, the outermost positive electrode layer and the outermost negative electrode layer respectively refer to the positive electrode layer and the negative electrode layer located on the outermost side in the lamination direction. In addition, an all-solid-state secondary battery having two or more positive electrode layers and two or more negative electrode layers has two outermost positive electrode layers and two outermost negative electrode layers. In the all-solid-state secondary battery having one positive electrode layer and one negative electrode layer as shown in Figs. 1 to 3 and 5, either electrode layer corresponds to the outermost positive electrode layer or the outermost negative electrode layer.

The voids 50a to 50h formed in the laminate may be formed continuously in the y direction or may be formed partially in the y direction.

The all-solid-state secondary batteries 100A, 100B, 100C, 100D, and 100E according to the above embodiments can be implemented by appropriately combining the characteristic constitutions thereof. The all-solid-state secondary batteries according to the above embodiments may be implemented by switching the shape of the positive electrode and the shape of the negative electrode.

Although the margin layer 32 is included in the solid electrolyte layer 30 in the above embodiments, the margin layer 32 may contain a compound other than the solid electrolyte as well as the solid electrolyte. Furthermore, the solid electrolyte included in the margin layer 32 may be different from the solid electrolyte included in the interlayer solid electrolyte layer 31. The interlayer solid electrolyte layer 31 includes not only the solid electrolyte layer provided between the positive electrode layer 10 and the negative electrode layer 20, but also the solid electrolyte layer located outside in the lamination direction of the electrode layer positioned outermost in the lamination direction.

### [Examples]

Examples of the present invention will be described below. The present invention is not limited to the following examples.

### [Example 1]

As Example 1, an all-solid-state secondary battery having a laminate in which 10 positive electrode layers and 10 negative electrode layers were alternately arranged with solid electrolyte layers between them was prepared and characteristics thereof were evaluated.

### <Preparation of laminate>

In Example 1, an all-solid-state secondary battery which included a laminate having a laminate in which 4 electrode layers of 20 electrode layers were in contact with void respectively was prepared by the following procedure.

### (Preparation of paste for solid electrolyte layer)

100 parts of Li_{1.3}Al_{0.3}Ti_{1.7}(PO₄)₃ powder was mixed with 100 parts of ethanol and 200 parts of toluene as a solvent and wet-mixed in a ball mill. After that, 16 parts of a polyvinyl butyral-based binder as a binder and 4.8 parts of benzyl butyl phthalate as a plasticizer were further introduced and mixed in to prepare an outermost solid electrolyte layer paste.

This paste for a solid electrolyte layer was formed into sheets through a doctor blade method using a PET film as a base material to obtain an outermost solid electrolyte layer sheet and an interlayer solid electrolyte layer sheet. A thickness of each of the outermost solid electrolyte layer sheet and the interlayer solid electrolyte layer sheet was 20 µm.

### (Preparation of paste for positive electrode active material layer and paste for negative electrode active material layer)

In the case of a paste for a positive electrode active material layer and a paste for a negative electrode active material layer, the paste for a positive electrode active material layer and the paste for a negative electrode active material layer were prepared by adding 15 parts of ethyl cellulose as a binder and 65 parts of dihydroterpineol as a solvent to 100 parts of Li₃V₂(PO₄)₃ powder, mixing the mixture, and dispersing the mixture.

### (Preparation of paste for positive electrode current collector and paste for negative electrode current collector)

In the case of a paste for a positive electrode current collector and a paste for a negative electrode current collector, a paste for a positive electrode current collector and a paste for a negative electrode current collector were prepared by mixing and dispersing 100 parts of Cu as a current collector, 10 parts of ethyl cellulose as a binder, and 50 parts of dihydroterpineol as a solvent.

### (Preparation of resin paste for forming void)

In the case of a resin paste for forming void, the resin paste for forming void was prepared by introducing, mixing, and dispersing 10 parts of ethyl cellulose as a binder and a void-forming resin and 50 parts of dihydroterpineol as a solvent.

### (Preparation of electrode unit)

A positive electrode unit and a negative electrode unit were prepared as follows.

A paste for an active material layer was printed on the above interlayer solid electrolyte layer sheet through screen printing to have a thickness of 5 µm. Subsequently, the printed paste for an active material layer was dried and a paste for a current collector was printed on it to have a thickness of 5 µm through screen printing. Subsequently, the printed paste for a current collector was dried and a paste for an active material layer was printed again on it to have a thickness of 5 µm through screen printing. The printed paste for an active material layer was dried, and then the PET film was peeled off. In this way, a paste for an active material layer, a paste for a current collector, and a paste for an active material layer were printed on the interlayer solid electrolyte layer sheet in this order and dried to obtain an electrode unit sheet.

### (Preparation of electrode unit in contact with void)

In Example 1, the electrode unit which became the electrode layer which was not in contact with the void was prepared through the above procedure and the electrode unit which became the electrode layer which was in contact with the void was prepared through the following procedure.

In order to prepare the electrode unit which became the electrode layer in contact with the void, ethyl cellulose was used as a resin at the time of preparing the positive electrode unit and the negative electrode unit. When a region surrounded by a positive electrode layer and a first surface that was a laminate-side surface on a side which was attached to the positive electrode layer was defined as a first region, a region surrounded by the positive electrode layer, a solid electrolyte layer, and a first surface was defined as a second region, a region surrounded by a negative electrode layer and a second surface that was the laminate-side surface which was attached to the negative electrode layer was defined as a third region, and a region surrounded by the negative electrode layer, the solid electrolyte layer, and the second surface was defined as a fourth region in Example 1, the following procedure was carried out to prepare a laminate having voids in the first and third regions.

In the positive electrode unit which became the positive electrode layer having void in the first region, after applying a paste for a positive electrode current collector, a resin paste was applied to one end of a paste for a positive electrode current collector in the in-plane direction through screen printing to form a resin portion having a thickness of 2 µm. Subsequently, a paste for a positive electrode active material layer was screen printed on the surfaces of the resin portion and the paste for a positive electrode current collector, and then dried to form a paste for a positive electrode current collector.

The positive electrode unit which became the positive electrode layer having void in the second region is formed by applying a paste for a solid electrolyte layer onto a PET film and drying it, and then forming a resin portion having a thickness of 2 µm on one end of a paste for a solid electrolyte in the in-plane direction through screen printing, screen-printing a paste for a positive electrode active material layer so that the resin portion and a region of the paste for a solid electrolyte in which it and the resin portion do not overlap and they overlap, and then drying them, and subsequently applying a paste for a positive electrode current collector and a paste for a positive electrode active material in sequence by screen printing, and then drying them.

The negative electrode units which became the negative electrode layers having voids in the third region and the fourth region were formed in the same manner as in the positive electrode unit having the positive electrode unit having void in the first region and the positive electrode unit having void in the second region, respectively.

### (Preparation of laminate)

The outermost solid electrolyte layer sheet was layered and 20 electrode units (10 positive electrode units and 10 negative electrode units) were alternately laminated on it with the interlayer solid electrolyte layer 31 disposed therebetween.

At this time, each of the units was laminated with a shift so that a layer of the paste for a current collector of the odd-numbered electrode units extended only to one end surface and a layer of the paste for a current collector of the even-numbered electrode units extended only to the opposite end surface. On this laminated unit, a solid electrolyte layer sheet for the outermost solid electrolyte layer was laminated. After that, this was formed through thermocompression and then cut to prepare a laminate. A laminate size had sizes of 5 mm, 4 mm, and 1 mm in the x, y, and z directions. Here, the size of the laminate in the z direction before firing corresponds to the height h0 in the above embodiment. That is to say, in Example 1, h₀=1 mm is satisfied.

Subsequently, the ceramic setter for a cover was disposed at the same height as the height h₀ of the side surface of the laminate before firing by placing the laminate before firing on the ceramic setter for a pedestal, and then disposing the laminates for adjusting a height on the four corners of the ceramic setter for a pedestal, and then they were fired simultaneously to obtain a laminate. In the simultaneous firing, the firing temperature was raised to 840°C in a nitrogen atmosphere at a rate of temperature increase of 100°C/hour, the temperature was maintained for 2 hours, and then the material was naturally cooled after firing.

### (Formation of outer electrode terminal)

An outer electrode paste was applied to a first surface and a second surface of the side surfaces of the laminate in which the current collector was exposed, heat-cured at 150 °C for 30 minutes to form a positive electrode external terminal and a negative electrode external terminal.

### (Evaluation of void)

A cross section of the laminate after firing in Example 1 was observed using a scanning electron microscope to evaluate a location and a shape of void formed in the laminate. The cross section was prepared by taking along a plane passing through a center of the laminate in the y direction. In the laminate of Example 1, it was confirmed that the first region, a second region, a third region, and a fourth region were located in the first positive electrode layer, a tenth positive electrode layer, a first negative electrode layer, and a tenth negative electrode layer, respectively, from the lower surface side. That is to say, in the all-solid-state secondary battery of Example 1, the ratio of the sum of the number of positive electrode layers in contact with void and the number of negative electrode layers in contact with void to the total number of positive electrode layers and negative electrode layers was 20%. Furthermore, in the all-solid-state secondary battery of Example 1, the entire outermost positive electrode layer and the outermost negative electrode layer located at the ends in the lamination direction were in contact with the void. In addition, the voids formed in Example 1 were all substantially rectangular and the angle between the voids of two adjacent layers in the laminate which defined the voids (the angle of the end portion void) was 0°.

A distance between the negative electrode layer and the first surface in the in-plane direction of the negative electrode layer, a distance between the positive electrode layer and the second surface in the in-plane direction of the positive electrode layer, and a length of void of the all-solid-state secondary battery in Example were measured and a ratio of these (length of void/distance between the negative electrode layer and the first surface or distance between the positive electrode layer and the second surface), that is, (L₅₀ₐ/L₃₂) or (L_{50b}/L₃₂), was calculated. The length was calculated as an average value of all five locations in the lamination direction of a predetermined electrode layer in a scanning electron microscope image. As a result, the ratio was 1 for all voids.

### [Short circuit resistance test]

1,000 all-solid-state secondary batteries similar to those in Example 1 were prepared. In addition, for each of the all-solid-state secondary batteries, an initial discharging capacity and a short circuit occurrence rate after 1000 cycles of an all-solid-state secondary battery were measured by providing the positive electrode external terminal and the negative electrode external terminal disposed in a spring probe so that they face each other and performing a charging and discharging test. The measurement conditions were as follows: in an environment of 25°C, constant current charging (CC charging) was performed at a constant current of a 1C rate until a battery voltage reached 1.6 V, and then discharging (CC discharging) was performed at a constant current of a 1C rate until a battery voltage reached 0 V. It is assumed that the above charging and discharging constitute one cycle and a short circuit occurrence rate was obtained from the number of short-circuited all-solid-state secondary batteries of 100 all-solid-state secondary batteries in which the charging and discharging was repeatedly performed for 1000 cycles. During CC charging, if a voltage suddenly dropped and then did not rise, this was determined to be a short circuit. As a result, the number of all-solid-state secondary batteries in which a short circuit occurred after 1000 cycles of the 1000 all-solid-state secondary batteries was 8. That is to say, the short circuit occurrence rate after 1000 cycles of the all-solid-state secondary battery of Example 1 was 0.8%.

### [Examples 2 to 5]

An all-solid-state secondary battery was prepared under the same conditions as in Example 1, except that an area in which the resin portion was formed was increased and (the void length/distance between the negative electrode layer and the first surface or the distance between the positive electrode layer and the second surface) were changed for all voids.

In Examples 2, 3, 4, and 5, the size of the void in the in-plane direction from the end portion was changed so that (void length/distance between the negative electrode layer and the first surface or distance between the positive electrode layer and the second surface)×100 (%) was 10%, 50%, 80%, and 150%, respectively. The lengths of the plurality of voids included in one all-solid-state secondary battery were controlled to be substantially the same.

### [Examples 6 to 9]

An all-solid-state secondary battery was prepared under the same conditions as in Example 1, except that a ceramic plate with a height Δh for adjusting a height was used and the height h₁ of the ceramic setter for a cover was changed during the firing step.

In Example 6, Example 7, Example 8, and Example 9, the height (Δh) of the ceramic plate for adjusting a height was set to 0.004 mm, 0.034 mm, 0.100 mm, and 0.142 mm, respectively.

### [Example 10]

An all-solid-state secondary battery was prepared in the same manner as in Example 1, except that the position is which the void was formed in the laminate was changed. In Example 10, the adjustment was performed so that the first region and the second region were provided in fourth and fifth positive electrode layers from a bottom side, respectively, of 10 positive electrode layers and the adjustment was performed so that the third region and the fourth region were provided in fifth and sixth negative electrode layers from the bottom side, respectively, of 10 negative electrode layers. In this way, in Example 10, a laminate in which the outermost positive electrode layer and the outermost negative electrode layer were not in contact with void was prepared.

### [Examples 11 to 14]

An all-solid-state secondary battery was prepared in the same manner as in Example 1, except that the number and the positions of the voids were changed. In Example 11, an all-solid-state secondary battery which included a laminate having void in a first region of a first positive electrode layer from a bottom side of 10 positive electrode layers and 10 negative electrode layers was prepared. In Example 12, an all-solid-state secondary battery which included a laminate having void in a first region of a first positive electrode layer from a bottom of 10 positive electrode layers and void in a third region of a first negative electrode layer from a bottom side of 10 negative electrode layers was prepared. In Example 13, an all-solid-state secondary battery which included a laminate in which the adjustment was performed so that voids were provided in first regions of first, third, fifth, seventh, and tenth positive electrode layers from a bottom side of 10 positive electrode layers and voids were provided in third regions of first, second, fourth, sixth, eighth, and tenth negative electrode layers from a bottom side of 10 negative electrode layers was prepared. In Example 14, an all-solid-state secondary battery was produced so that all of the electrode layers were in contact with void.

### [Comparative Example 1]

An all-solid-state secondary battery was prepared in the same manner as in Example 1, except that the resin portion was not used and an electrode layer or a paste for a solid electrolyte layer was used in the place in which the resin portion was used.

The all-solid-state secondary batteries prepared in Examples 2 to 13 and Comparative Example 1 were evaluated in the same manner as in Example 1. The results are shown in Table 1. In each of Examples 2 to 14 and Comparative Example 1, the plurality of voids in the examples in which the plurality of voids were formed had substantially the same shape.

**[Table 1]**

| | Total number of electrode layers | Number of voids | Number of voids in contact with outermost electrode layer | Proportion of electrode layer in contact with void (%) | (Length of void/distance between positive electrode layer and second surface or distance between negative electrode layer and first surface)×100(%) | Angle of voids θ (degree) | Short circuit occurrence rate after 1000 cycles (%) |
|---|---|---|---|---|---|---|---|
| Example 1 | 20 | 4 | 4 | 20 | 100 | 0 | 0.8 |
| Example 2 | 20 | 4 | 4 | 20 | 10 | 0 | 1.5 |
| Example 3 | 20 | 4 | 4 | 20 | 50 | 0 | 1 |
| Example 4 | 20 | 4 | 4 | 20 | 80 | 0 | 0.6 |
| Example 5 | 20 | 4 | 4 | 20 | 150 | 0 | 1.5 |
| Example 6 | 20 | 4 | 4 | 20 | 100 | 1 | 1 |
| Example 7 | 20 | 4 | 4 | 20 | 100 | 10 | 1.1 |
| Example 8 | 20 | 4 | 4 | 20 | 100 | 30 | 1.2 |
| Example 9 | 20 | 4 | 4 | 20 | 100 | 45 | 1.5 |
| Example 10 | 20 | 4 | 0 | 20 | 100 | 0 | 1.2 |
| Example 11 | 20 | 1 | 1 | 5 | 100 | 0 | 1.5 |
| Example 12 | 20 | 2 | 2 | 10 | 100 | 0 | 1 |
| Example 13 | 20 | 10 | 4 | 50 | 100 | 0 | 0.7 |
| Example 14 | 20 | 20 | 4 | 100 | 100 | 0 | 0.6 |
| Comparative Example 1 | 20 | 0 | 0 | 0 | - | - | 2 |

When the cross sections were observed using a scanning electron microscope, in Examples 1 to 14, it is confirmed that, compared to Comparative Example 1, the number of cracks directed from one end which does not extend of the electrode layer to the electrode active material layer which has a different polarity from the electrode layer is small and the length is short. Furthermore, in Examples 2 to 5 and 10 to 14, as in Example 1, a curved portion is not observed and all voids have a substantially flat shape. On the other hand, in Examples 6, 7, 8, and 9, it is confirmed that curved portions are in at least one of the electrode layer and the solid electrolyte layer and the angles formed by the voids of the two layers which define the void are 1°, 10°, 30°, and 45°, respectively.

Comparing Examples 1 to 14 with Comparative Example 1, the short circuit occurrence rate is reduced in all Examples compared to Comparative Example 1. Therefore, it is confirmed that the formation of void in the laminate in at least one of the regions surrounded by the electrode layer and the electrode active material layer, and the region surrounded by the electrode layer, the solid electrolyte layer, and the electrode active material layer can suppress the occurrence of cracks and reduce the short circuit occurrence rate.

Comparing Examples 1 to 5, it is confirmed that the effect of suppressing the short circuit occurrence rate can be obtained more effectively by setting the ratio in the in-plane direction (void length/distance between the negative electrode layer and the first surface or the distance between the positive electrode layer and the second surface)×100 (%) to be greater than 10% and less than 150% and that the effect of suppressing the short circuit occurrence rate can be obtained even more effectively by setting the ratio to be 50% or more and 100% or less. The reason why the short circuit occurrence rate is higher when the ratio is a predetermined value or more than when it is within a predetermined range is considered to be because cracks are more likely to occur toward the void.

Comparing Example 1 with Examples 6 to 9, it is confirmed that, when the angle formed through the void of the two layers which define the void of the laminate is 30° or less, the short circuit occurrence rate can be reduced compared to when the angle is 45°. This is considered to be because the movement in the z direction becomes large during expansion and contraction due to charging and discharging, making cracks more likely to occur.

Comparing Example 1 and Example 10, it is confirmed that, in Example 1 in which the outermost electrode layer is in contact with the void, compared to Example 10 in which the outermost electrode layer is not in contact with the void, it is effective to provide the void so that the void is in contact with the outermost electrode layer to reduce the occurrence of short circuits and improve cycle characteristics. Comparing Examples **1,** 11, 12, 13, and 14, the short circuit occurrence rate decreases in the order of the proportion of the electrode layer in contact with the void (100%, 50%, 20%), confirming the effectiveness of forming void in contact with the electrode layer.

### [Example 15]

An all-solid-state secondary battery was prepared in the same manner as in Example 1, except that the materials for the solid electrolyte, the positive electrode layer, and the negative electrode layer were changed. In Example 15, the solid electrolyte layer was prepared in the same manner as in Example 1, except that LATP in the solid electrolyte paste was changed to Li_{3.5}Si_{0.5}P_{0.5}O₄(LSPO). Furthermore, at the time of preparing the positive electrode unit, the positive electrode unit was prepared in the same as in Example 1, except that the LVP in the paste for a positive electrode active material layer was changed to LiCoO₂(LCO) and the Cu in the paste for a positive electrode current collector was changed to AgPd. At the time of preparing the negative electrode unit, the negative electrode unit was prepared in the same as in Example 1, except that the LVP in the paste for a negative electrode active material layer was changed to AgPd and the Cu in the paste for a negative electrode current collector was changed to AgPd.

The all-solid-state secondary battery of Example 15 was prepared in the same manner as in Example 1, except that the above paste was used. That is to say, in Example 15, the negative electrode layer was an integrated layer in which the negative electrode current collector and the negative electrode active material layer were integrated.

### [Examples 16 to 19]

All-solid-state secondary batteries in Examples 16 to 19 were prepared in the same manner as in Examples 2 to 5, except that the materials of the solid electrolyte, the positive electrode layer, and the negative electrode layer were changed to the same materials as in Example 15. Examples 16 to 19 had the same conditions except for (void length/distance between the negative electrode layer and the first surface or distance between the positive electrode layer and the second surface).

### [Examples 20 to 23]

All-solid-state secondary batteries in Examples 20 to 23 were prepared in the same manner as in Examples 6 to 9, except that the materials of the solid electrolyte, the positive electrode layer, and the negative electrode layer were changed to the same materials as in Example 15. Examples 20 to 23 had the same conditions except for the void angle.

### [Examples 24 to 28]

All-solid-state secondary batteries in Examples 24 to 28 were prepared in the same manner as in Examples 10 to 14, except that the materials of the solid electrolyte, the positive electrode layer, and the negative electrode layer were changed to the same materials as in Example 15. Examples 24 to 28 had the same conditions except for the number and the placement of voids.

### [Examples 29 to 32]

An all-solid-state secondary battery was prepared in the same manner as in Example 15, except that the thickness of the paste for an active material layer printed by performing screen printing on the interlayer solid electrolyte layer sheet and the thickness of the paste for an active material layer printed on the dried paste for a current collector were changed. Examples 29 to 32 had the same conditions except for the thickness of the paste for an active material layer.

### [Comparative Examples 2 to 5]

An all-solid-state secondary battery was prepared in the same manner as in Example 1, except that the resin portion was not used and the electrode layer or the paste for a solid electrolyte layer was used in the place in which the resin portion was used.

### [Evaluation]

The all-solid-state secondary batteries prepared in Examples 15 to 32 and Comparative Examples 2 to 5 were evaluated in the same manner as Example 1. The results are shown in Table 2. In each of Examples 15 to 32 and Comparative Examples 2 to 5, the plurality of voids in the Examples in which the plurality of voids were formed had substantially the same shape.

**[Table 2]**

| | Solid electrolyte | Positive electrode active material/current collector | Negative electrode active material/current collector | Active material paste thickness | Total number of electrode layers | Number of voids | Number of voids in contact with outermost electrode layers | Proportion of electrode layers in contact with void (%) | (Length of void/distance between positive electrode layer and second surface or distance between negative electrode layer and first surface)×100(%) | Angle of voids (degree) | Short circuit occurrence rate after 1000 cycles (%) |
|---|---|---|---|---|---|---|---|---|---|---|---|
| Example 15 | LSPO | LCO/AgPd | AgPd/AgPd | 5 | 20 | 4 | 4 | 20 | 100 | 0 | 0.7 |
| Example 16 | LSPO | LCO/AgPd | AgPd/AgPd | 5 | 20 | 4 | 4 | 20 | 10 | 0 | 1.3 |
| Example 17 | LSPO | LCO/AgPd | AgPd/AgPd | 5 | 20 | 4 | 4 | 20 | 50 | 0 | 0.9 |
| Example 18 | LSPO | LCO/AgPd | AgPd/AgPd | 5 | 20 | 4 | 4 | 20 | 80 | 0 | 0.5 |
| Example 19 | LSPO | LCO/AgPd | AgPd/AgPd | 5 | 20 | 4 | 4 | 20 | 150 | 0 | 1.4 |
| Example 20 | LSPO | LCO/AgPd | AgPd/AgPd | 5 | 20 | 4 | 4 | 20 | 100 | 1 | 0.9 |
| Example 21 | LSPO | LCO/AgPd | AgPd/AgPd | 5 | 20 | 4 | 4 | 20 | 100 | 10 | 1 |
| Example 22 | LSPO | LCO/AgPd | AgPd/AgPd | 5 | 20 | 4 | 4 | 20 | 100 | 30 | 1.2 |
| Example 23 | LSPO | LCO/AgPd | AgPd/AgPd | 5 | 20 | 4 | 4 | 20 | 100 | 45 | 1.6 |
| Example 24 | LSPO | LCO/AgPd | AgPd/AgPd | 5 | 20 | 4 | 0 | 20 | 100 | 0 | 1.2 |
| Example 25 | LSPO | LCO/AgPd | AgPd/AgPd | 5 | 20 | 1 | 1 | 5 | 100 | 0 | 1.5 |
| Example 26 | LSPO | LCO/AgPd | AgPd/AgPd | 5 | 20 | 2 | 2 | 10 | 100 | 0 | 0.9 |
| Example 27 | LSPO | LCO/AgPd | AgPd/AgPd | 5 | 20 | 10 | 4 | 50 | 100 | 0 | 0.7 |
| Example 28 | LSPO | LCO/AgPd | AgPd/AgPd | 5 | 20 | 20 | 4 | 100 | 100 | 0 | 0.5 |
| Example 29 | LSPO | LCO/AgPd | AgPd/AgPd | 3 | 20 | 4 | 4 | 20 | 100 | 0 | 1.1 |
| Example 30 | LSPO | LCO/AgPd | AgPd/AgPd | 12 | 20 | 4 | 4 | 20 | 100 | 0 | 0.9 |
| Example 31 | LSPO | LCO/AgPd | AgPd/AgPd | 57 | 20 | 4 | 4 | 20 | 100 | 0 | 0.7 |
| Example 32 | LSPO | LCO/AgPd | AgPd/AgPd | 62 | 20 | 4 | 4 | 20 | 100 | 0 | 1.7 |
| Comparaitve Example 2 | LSPO | LCO/AgPd | AgPd/AgPd | 3 | 20 | 0 | 0 | 0 | - | - | 2.5 |
| Comparaitve Example 3 | LSPO | LCO/AgPd | AgPd/AgPd | 5 | 20 | 0 | 0 | 0 | - | - | 4.7 |
| Comparaitve Example 4 | LSPO | LCO/AgPd | AgPd/AgPd | 12 | 20 | 0 | 0 | 0 | - | - | 6.1 |
| Comparaitve Example 5 | LSPO | LCO/AgPd | AgPd/AgPd | 57 | 20 | 0 | 0 | 0 | - | - | 7 |

When the cross sections are observed using a scanning electron microscope, in Examples 15 to 32, compared to Comparative Examples 2 to 5, it is confirmed that the number of cracks directed from one end which does not extend of the electrode layer to the electrode active material layer having a different polarity from the electrode layer is small and the length is short. Furthermore, in Examples 16 to 29 and 24 to 32, as in Example 1, a curved portion is not observed and all voids have a substantially flat shape. On the other hand, in Examples 20, 21, 23, and 24, curved portions are confirmed in at least one of the electrode layer and the solid electrolyte layer and the angles formed by the void of the two layers which define the void are 1°, 10°, 30°, and 45°, respectively.

Comparing Examples 15 to 32 with Comparative Example 3, the short circuit occurrence rate is suppressed in each of the Examples than in Comparative Example 3. Therefore, it is confirmed that the formation of void in the laminate in at least one of the regions surrounded by the electrode layer and the electrode active material layer and the region surrounded by the electrode layer, the solid electrolyte layer, and the electrode active material layer can suppress the occurrence of cracks and reduce the short circuit occurrence rate. Furthermore, from the comparison of Example 29, Example 1, Example 30 to Example 32, and Comparative Examples 2 to 5, it is confirmed that the short circuit occurrence rate differs significantly depending on the presence or absence of void, also in all-solid-state secondary batteries with the same thickness of active material.

Also, when it is confirmed from the comparisoin of Comparative Examples 3 and 1 that the short circuit occurrence rate is particularly high when the electrode layer contains AgPd, from the comparison of Examples 1 to 14 and Examples 15 to 28, it is confirmed that, when the electrode layer contains AgPd, the effect of suppressing the short circuit occurrence rate is particularly large when void is provided.

### [Example 33]

An all-solid-state secondary battery was prepared in the same manner as in Example 1, except that LATP in the paste for a solid electrolyte layer was changed to LSPO.

### [Example 34]

An all-solid-state secondary battery was prepared in the same manner as in Example 1, except that LATP in the paste for a solid electrolyte layer was changed to LSPO, Cu in the paste for a negative electrode current collector was changed to AgPd, and LVP in the paste for a negative electrode active material layer was changed to AgPd.

### [Example 35]

An all-solid-state secondary battery was prepared in the same manner as in Example 1, except that LVP in the paste for a positive electrode active material layer was changed to LCO, Cu in the paste for a positive electrode current collector was changed to AgPd, LVP in the paste for a negative electrode active material layer was changed to AgPd, and Cu in the paste for a negative electrode current collector was changed to AgPd.

### [Example 36]

An all-solid-state secondary battery was prepared in the same manner as in Example 1, except that LVP in the paste for a positive electrode active material layer was changed to LCO and Cu in the paste for a positive electrode current collector was changed to AgPd.

### [Evaluation]

The all-solid-state secondary batteries in Examples 33 to 36 were evaluated in the same manner as in the all-solid-state secondary battery in Example 1. The results are shown in Table 3. In Examples 33 to 36, the plurality of voids in the examples in which the plurality of voids are formed have substantially the same shape. In each of the examples, it is confirmed that the short circuit occurrence rate can be suppressed compared to Comparative Examples 1 to 5.

**[Table 3]**

| | Solid electrolyte | Positive electrode active material/current collector | Negative electrode active material/current collector | Active material paste thickness | Total number of electrode layers | Number of voids | Number of voids in contact with outermost electrode layers | Proportion of electrode layers in contact with void (%) | (Length of void/distance between positive electrode layer and second surface or distance between negative electrode layer and first surface)x100(%) | Angle of voids (degree) | Short circuit occurrence rate after 1000 cycles (%) |
|---|---|---|---|---|---|---|---|---|---|---|---|
| Example 33 | LSPO | Li₃V₂(PO₄)₃/Cu | Li₃V₂(PO₄)₃/Cu | 5 | 20 | 4 | 4 | 20 | 100 | 0 | 1.1 |
| Example 34 | LSPO | Li₃V₂(PO₄)₃/Cu | AgPd/AgPd | 5 | 20 | 4 | 4 | 20 | 100 | 0 | 1.1 |
| Example 35 | Li_{1.3}Al_{0.3}Ti_{1.7}(PO₄)₃ | LCO/AgPd | AgPd/AgPd | 5 | 20 | 4 | 4 | 20 | 100 | 0 | 1 |
| Example 36 | Li_{1.3}Al_{0.3}Ti_{1.7}(PO₄)₃ | LCO/AgPd | Li₃V₂(PO₄)₃/Cu | 5 | 20 | 4 | 4 | 20 | 100 | 0 | 1.2 |

### REFERENCE SIGNS LIST

1A, 1B, 1C, 1D, 1E Laminate
2 Positive electrode external terminal
3 Negative electrode external terminal
10A, 10B, 10C, 10D, 10E, 10F Positive electrode layer
11, 11A, 11B, 11C Positive electrode current collector
11Aw Curved portion (positive electrode current collector curved portion)
11Ap, 11Bp, 11Cp Flat portion (positive electrode current collector flat portion)
11Bx Extension portion (positive electrode current collector extension portion)
12, 12A Positive electrode active material layer
12Ap Flat portion (positive electrode active material layer flat portion)
20A, 20B, 20C, 20D, 20E, 20F Negative electrode layer
21, 21A, 21C, 21E Negative electrode current collector
21Cp, 21Ep Flat portion (negative electrode current collector flat portion)
21Cw, 21Ew, 21Fw Curved portion (negative electrode current collector curved portion)
22, 22A, 22B, 22Ew1, 22Ew2 Negative electrode active material layer
22Ew1, 22Ew2, 22Fw Curved portion (negative electrode active material layer curved portion)
30 Solid electrolyte layer
31 Interlayer solid electrolyte layer
32 Margin layer
50a, 50b, 50c, 50d, 50e, 50f, 50g Void
E10, E20, E20D One end which does not extend
S1 First surface
S2 Second surface
St Upper surface
Sb Lower surface
   100A, 100B, 100C, 100D All-solid-state secondary battery

## Claims

1. An all-solid-state secondary battery, comprising:
a laminate in which a positive electrode layer containing a positive electrode active material and a negative electrode layer containing a negative electrode active material are laminated with a solid electrolyte layer disposed therebetween; and
a positive electrode external terminal attached to the positive electrode layer on a first surface of a side surface of the laminate and a negative electrode external terminal attached to the negative electrode layer on a second surface of the side surface of the laminate different from the first surface,
wherein the positive electrode layer extends in a direction in which it is directed from the first surface to the second surface,
the negative electrode layer extends in a direction in which it is directed from the second surface to the first surface, and
in the laminate,
a void is formed in at least one region of
a region surrounded by the positive electrode layer and the first surface,
a region surrounded by the positive electrode layer, the solid electrolyte layer, and the first surface,
a region surrounded by the negative electrode layer and the second surface, and
a region surrounded by the negative electrode layer, the solid electrolyte layer, and the second surface.

2. The all-solid-state secondary battery according to claim 1, wherein a ratio of a length of the void to a distance between the negative electrode layer and the first surface in an in-plane direction of the negative electrode layer is 20% to 100%, and
a ratio of a length of the void to a distance between the positive electrode layer and the second surface in an in-plane direction of the positive electrode layer is 20% to 100%.

3. The all-solid-state secondary battery according to claim 1 or 2, wherein an angle formed by voids of two layers which define the void is 30° or less.

4. The all-solid-state secondary battery according to any one of claims 1 to 3, wherein the laminate includes a plurality of positive electrode layers including an outermost positive electrode layer located at an end in a lamination direction, a plurality of negative electrode layers including an outermost negative electrode layer located at an end in the lamination direction, and a plurality of solid electrolyte layers, and
in the laminate,
a void is formed in at least one region of
a region surrounded by the outermost positive electrode layer and the first surface,
a region surrounded by the outermost positive electrode layer, the solid electrolyte layer, and the first surface,
a region surrounded by the outermost negative electrode layer and the second surface, and
a region surrounded by the outermost negative electrode layer, the solid electrolyte layer, and the second surface.

5. The all-solid-state secondary battery according to any one of claims 1 to 4, wherein the laminate includes a plurality of positive electrode layers and a plurality of negative electrode layers, and
a ratio of a sum of the number of positive electrode layers in contact with the void and the number of negative electrode layers in contact with the void to a total number of the plurality of positive electrode layers and the plurality of negative electrode layers is 10% or more.

6. The all-solid-state secondary battery according to any one of claims 1 to 5, wherein the positive electrode layer includes a positive electrode current collector and a positive electrode active material layer,
the negative electrode layer includes a negative electrode current collector and a negative electrode active material layer, and
the void is in contact with the positive electrode active material layer or the negative electrode active material layer.

7. The all-solid-state secondary battery according to any one of claims 1 to 6, wherein at least one of the positive electrode active material and the negative electrode active material is AgPd.
